# EUROPÄISCHE PATENTANMELDUNG

(11) **EP 1 406 431 A1**
(43) Veröffentlichungstag der Anmeldung: **07.04.2004**
(21) Anmeldenummer: 03022153.5
(22) Anmeldetag: 30.09.2003
(51) Int. Cl.: H04M 3/54, H04M 7/00

(54) **Verfahren zur Rufweiterleitung in einem intelligenten privaten Netz**

(30) Priorität: 01.10.2002 DE 10245821
(71) Anmelder: Tenovis GmbH & Co. KG, 60326 Frankfurt am Main (DE)
(72) Erfinder: Möller, Uwe, 61250 Usingen (DE); Henneke, Dietmar, 41462 Neuss (DE)
(74) Vertreter: Heinze, Ekkehard, Dipl.-Phys. Dr.

(57) **Zusammenfassung**

Es wird ein Verfahren zur Rufumleitung in einem intelligenten privaten Netz (IPN) zwischen TK-Anlagen (PINX) beschrieben. Eine etablierte Erstverbindung (CONNECT-1) zwischen einer Vermittlungs-PINX (SU-PINX) und einer Rufumleitungs-PINX (R-PINX) sowie Komponenten der Rufumleitungs-PINX (R-PINX-1, R-PINX-2) werden nach einer erfolgten ersten Rufumleitung in einen Status eines kontrollierten Wartezustands gesetzt. Anforderungen zu einer weiteren Rufumleitung werden zusammen mit einer Optimierungsmeldung (REROUTING-OPT) von der Vermittlungs-PINX an die Komponenten der Rufumleitungs-PINX übertragen, wobei ein erneuter Aufbau der Erstverbindung unterbleibt und die Erstverbindung (CONNECT-1) in einen Status eines reaktivierten Zustandes gesetzt wird.

## Beschreibung

Die Erfindung betrifft ein Verfahren zur Rufumleitung in einem intelligenten privaten Netz nach dem Oberbegriff des Anspruchs 1.

Ein Verfahren zur Vernetzung von Kommunikationssystemen ist unter dem Begriff der virtuellen Vernetzung bekannt. Derartige Kommunikationsnetze werden als Intelligente Private Netze (IPN) bezeichnet. Die virtuelle Vernetzung ermöglicht eine Nutzung übergreifender Leistungsmerkmale, beispielsweise von Rufumleitungen, Warteschaltungen und Vermittlungsfunktionen von allen darin einbezogenen Endgeräten aus. Zum Betrieb derartiger Netze werden in der Regel öffentliche Amtsleitungen genutzt, um Wählverbindungen zu einer Zielanlage aufzubauen, die die Leistungsmerkmale bereitgestellt. Standleitungen oder Festverbindungen zwischen einzelnen Kommunikationssystemen sind dadurch nicht mehr notwendig.

Die Telekommunikationsanlagen (TK-Anlagen), zwischen denen innerhalb des intelligenten privaten Netzes Kommunikationsverbindungen aufgebaut werden, werden allgemein mit dem Begriff PINX bezeichnet. PINX steht als Abkürzung für den Fachbegriff "Private Integrated Network Exchange" und bezeichnet eine komplexe Telefonanlage mit umfangreichen Netzwerkfähigkeiten mit der Möglichkeit einer gleichzeitigen Verwaltung mehrerer Endgeräte. Derartige Telekommunikationsanlagen werden allgemein auch als PABX, bzw. CABX-Anlagen bezeichnet. PABX und CABX stehen für die Begriffe "Private Automatic Branch Exchange", bzw. "Computerized Automatic Branch Exchange" und bezeichnen automatische, bzw. programmgesteuerte Anlagen, die verbindungsorientierte Vermittlungen zwischen Endgeräten und Weitverkehrsnetzen, insbesondere Amtsanschlüssen ausführen. Statt PABX oder CABX werden auch die Begriffe PBX und CBX synonym verwendet.

In der Regel fallen bereits bei einem erfolgreichen Aufbau von Wählverbindungen über leitungsorientierte Telekommunikation Gebühren an. Große Domänen, bei denen viele Kommunikationssysteme vernetzt sind, weisen zentrale Komponenten, beispielsweise Sprachspeicher, interaktive Spracherkennungssysteme und vergleichbare Komponenten auf, die von allen Kommunikationsanlagen gemeinsam genutzt werden. Bei einem Verbindungsaufbau zu diesen zentralen Ressourcen müssen somit bereits Gebühren in teilweise erheblichem Umfang entrichtet werden. Das ist besonders dann nachteilig, wenn die zentralen Komponenten Anforderungen für Rufumleitungen innerhalb des intelligenten privaten Netzes ausführen, weil hierfür jeweils neue Wählverbindungen benötigt werden und aufgebaut werden müssen.

Es besteht daher die Aufgabe, ein Verfahren für eine Rufumleitung in derartigen intelligenten privaten Netzen anzugeben, das es gestattet, Kommunikationswege und damit verbundene Kosten bei einer virtuellen Vernetzung zu optimieren. Weiterhin ist eine TK-Anlage zur Verwendung innerhalb derartiger Netze anzugeben, die eine derartige Wege- und Kostenoptimierung gewährleistet.

Die Lösung der Aufgabe erfolgt mit einem Verfahren zur Rufumleitung mit den Merkmalen des Anspruchs 1 und einer Anordnung zum Ausführen des Verfahrens.

Erfindungsgemäß besteht ein Grundgedanke des Verfahrens darin, eine Rufumleitung unter Beteiligung einer ersten TK-Anlage, einer zweiten, als zentrale Vermittlungsstelle dienenden TK-Anlage und einer dritten, zum Ausführen der Rufumleitung dienenden TK-Anlage so auszuführen, dass nach einer ersten Rufumleitung eine bestehende Erstverbindung zwischen der zweiten und der dritten Anlage und/oder einem ersten und einem zweiten Bestandteil der dritten Anlage nicht abgebaut, sondern in einen kontrollierten Wartestatus gesetzt wird. Eine Anforderung zu einer weiteren Rufumleitung, die von der zweiten zur dritten Anlage übermittelt wird, erfolgt dann über die Erstverbindung. Die Rufumleitung wird von der dritten TK-Anlage zu dem Rufumleitungsziel ausgeführt, wobei ein Abbau und erneuter Aufbau einer Kommunikationsverbindung zwischen der zweiten und der dritten TK-Anlage oder den Komponenten der dritten TK-Anlage unterbleibt.

Weil dieser erneute Verbindungsaufbau unterbleibt, entfallen die damit verbundenen Wähl- und Vermittlungsgebühren. Gleichzeitig wird zusätzlich zu dieser Kostenoptimierung eine Optimierung der Kommunikationswege erreicht, weil eine einmal bestehende kommunikative Verbindung zwischen den beteiligten TK-Anlagen mehrfach und ohne ein erneutes Ausführen von Wahl- und Vermittlungsvorgängen genutzt werden kann.

Im Ergebnis des Aufbaus der Erstverbindung werden als zweckmäßige Ausgestaltung durch die zweite TK-Anlage Daten für eine Optimierungsinformation für eine spätere Prozesssteuerung von Rufumleitungen erzeugt und gespeichert. Dadurch ist eine Reaktivierung der im Wartezustand gehaltenen Erstverbindung bei einer erneuten Anforderung auf Rufumleitung problemlos möglich. Die Optimierungsinformation wird als Steuerungsinstrument in der zweiten TK-Anlage genutzt und dient ebenfalls als Grundlage für eine weitere Steuerung der Wegeund Kostenoptimierung im intelligenten privaten Netz.

Die gespeicherte Optimierungsinformation wird an die dritte TK-Anlage als Bestandteil einer Steuerungsmeldung gesendet. Die dritte TK-Anlage wird durch diese Steuerungsmeldung auf auszuführende Rufumleitungen eingestellt und erhält damit die aktuell vorliegenden Optionen für auszuführende Rufumleitungsprozesse. Damit ist vor allem sichergestellt, dass die jeweils aktuellsten Optimierungsinformationen an der dritten TK-Anlage anliegen.

Stimmt die Richtung einer Rufumleitung zur Zielanlage mit der Richtung des ersten Rufumleitungsziels überein, führt der erste Bestandteil der dritten TK-Anlage eine Aktivierung der in dem Status des kontrollierten Wartezustandes befindlichen Erstverbindung zu dem zweiten Bestandteil der dritten TK-Anlage aus, indem der Status des kontrollierten Wartezustandes beendet und die Erstverbindung in einen aktiven Status gesetzt wird. Eine Anforderung für eine auf dem Weg der Erstverbindung erfolgende Rufumleitung wird von dem ersten zu dem zweiten Bestandteil der dritten TK-Anlage in Verbindung mit der Steuerungsmeldung übermittelt. Dabei wird im Ansprechen auf diese Anforderung durch den zweiten Bestandteil der dritten TK-Anlage die Optimierung der dritten TK-Anlage ausgeführt, eine kommunikative Verbindung zu einer als Rufumleitungsziel dienenden vierten TK-Anlage eröffnet, die Rufumleitung ausgeführt und die Verbindung zur zweiten TK-Anlage abgebaut.

Eine Anordnung zur Ausführung des Verfahrens weist eine in einen ersten und einen zweiten Bestandteil gegliederte, in einem intelligenten privaten Netz angeordnete TK-Anlage für Rufumleitungsprozesse auf, die eine kommunikative Verbindung zwischen dem ersten und dem zweiten Bestandteil enthält, wobei sich diese fallweise im Status eines aktiven oder eines kontrollierten Wartezustands befindet. Weiterhin weist die Anordnung eine in dem IPN angeordnete TK-Anlage für eine zentrale Vermittlung auf, die einen Speicherbereich für Daten einer Optimierungsinformation und Einrichtungen zum Erzeugen einer Steuerungsmeldung aus den Daten der Optimierungsinformation zur Steuerung der TK-Anlage für Rufumleitungen auf der Grundlage der Daten der Optimierungsinformation enthält.

Der erste Bestandteil der TK-Anlage für Rufumleitungen ist dafür mit Einrichtungen zum Verarbeiten der Steuerungsmeldung und weiterhin zum Erzeugen und Versenden einer Anforderung an den zweiten Bestandteil der TK-Anlage für Rufumleitungen für eine Konfiguration des zweiten Bestandteils der TK-Anlage für Rufumleitungen und ein Eröffnen einer kommunikativen Verbindung zu einem Rufumleitungsziel ausgestattet. Der zweite Bestandteil der TK-Anlage für Rufumleitungen ist mit einer Einrichtung zum Empfang der Anforderung zum Aufbau der kommunikativen Verbindung zu dem Rufumleitungsziel ausgestattet und verfügt weiterhin über eine Einrichtung zum erzeugen der kommunikativen Verbindung.

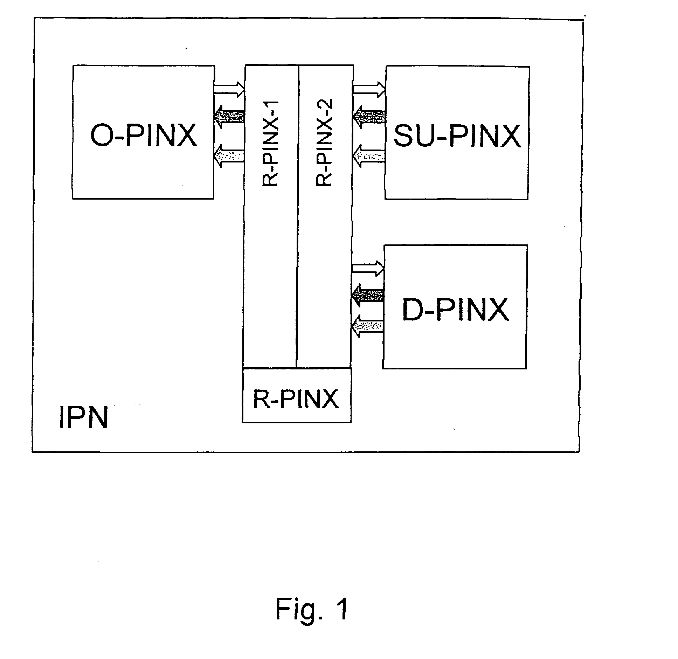

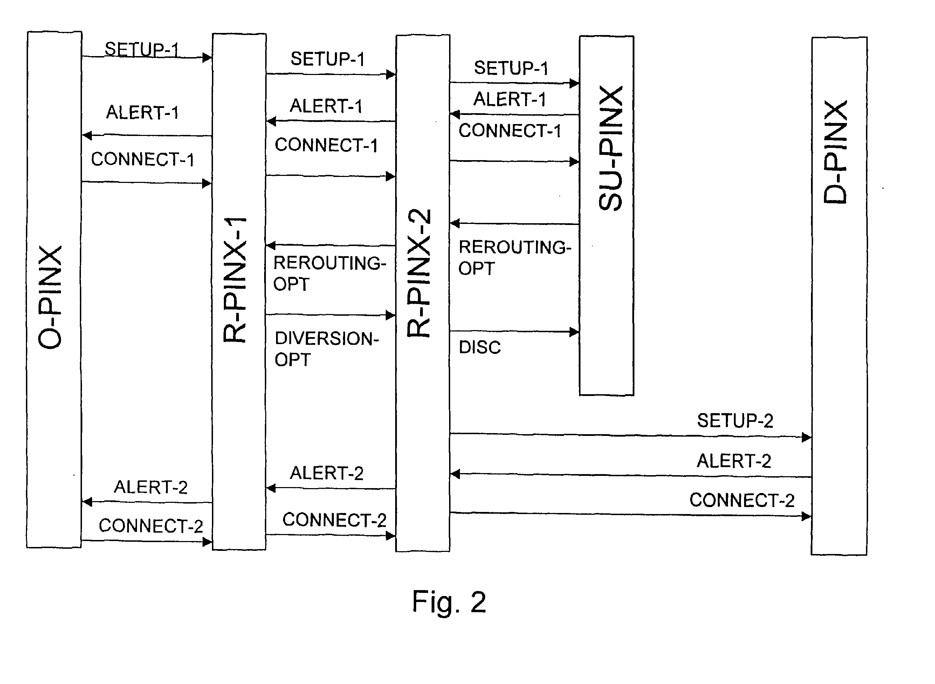

Das Verfahren soll nachfolgend an einem Ausführungsbeispiel anhand der Figuren 1 und 2 näher erläutert werden. Es zeigen:
- Figur 1: eine Darstellung des Systemaufbaus sowie grundlegender Verfahrensabläufe in einem schematischen Überblick,
- Figur 2: eine detailliertere Darstellung eines bevorzugten Verfahrens.

Fig. 1 zeigt eine Anordnung von TK-Anlagen in einem intelligenten privaten Netz IPN. Diese werden beispielhaft als TK-Anlagen verstanden, die als CABX-Anlagen im Sinne der oben genannten Definition miteinander kommunizieren. Dabei bildet eine erste TK-Anlage O-PINX eine Start-PINX, das heißt diejenige Anlage, von der aus die Erstverbindung aufgebaut wird. Eine zweite TK-Anlage wird durch die SU-PINX gebildet. Diese stellt eine Vermittlungsanlage dar und dient in diesem Verfahrensbeispiel insbesondere dazu, Anforderungen auf Rufumleitungen einer dritten TK-Anlage R-PINX zuzuordnen und zu senden. Die dritte TK-Anlage bildet in diesem Anwendungsbeispiel eine Rufumleitungs-PINX R-PINX und dient zum Ausführen der Anforderungen auf Rufumleitung der Served-User-PINX. In dem nachfolgend beschriebenen Ausführungsbeispiel ist die R-PINX aus zwei Telekommunikationsanlagen R-PINX-1 und R-PINX-2 zusammengesetzt.

Das Rufumleitungsziel ist in diesem Ausführungsbeispiel durch eine Ziel-PINX D-PINX als vierte TK-Anlage gebildet. Dabei bildet die D-PINX entweder selbst das Rufumleitungsziel oder enthält es innerhalb ihrer TK-Struktur. Die TK-Anlage R-PINX-1 wird in diesem Anwendungsbeispiel zum Zweck einer übersichtlicheren Darstellung als eine selbständige TK-Komponente innerhalb der R-PINX beschrieben. Es ist jedoch auch möglich, die R-PINX-1 mit der O-PINX und/oder der D-PINX zusammenzufassen. Dabei gelten die in dem hier genannten Ausführungsbeispiel erwähnten Ausführungen sinngemäß auch für eine solche im Rahmen fachmännischen Handelns ausgeführte funktionelle Zusammenfassung.

Grundlegende Datenübertragungen sind in Fig. 1 durch unterschiedlich gestaltete Pfeile dargestellt. Die unausgefüllten Pfeile stellen hierbei Operationen zu einem Aufbau einer kommunikativen Verbindung SETUP-1 und SETUP-2 zwischen den einzelnen TK-Einrichtungen dar. Die vertikal schraffierten Pfeile repräsentieren Operationen zum Herstellen von Datenübertragungen insbesondere in Form von Rückmeldungen ALERT-1 und ALERT-2 sowie Steuerungsmitteilungen REROUTING-OPT, schräg schraffierte Pfeile verdeutlichen aufgebaute Verbindungen CONNECT-1 und CONNECT-2 zwischen den einzelnen TK-Einrichtungen. Die einzelnen, durch die Pfeile in Fig. 1 symbolisierten Verfahrensschritte und Datenflüsse werden in Fig. 2 näher beschrieben.

Fig. 2 zeigt ein Ausführungsbeispiel des erfindungsgemäßen Verfahrens in einer detaillierteren Darstellung. Von der TK-Einrichtung O-PINX erfolgt in einem Wahlvorgang ein Aufbau einer Erstverbindung SETUP-1 zu der als zentrale Vermittlungseinrichtung dienenden SU-PINX. Hier wird dieser Erstverbindungsaufbau zwischen O-PINX und SU-PINX über die Komponenten R-PINX-1 und R-PINX-2 geführt. In Verbindung damit werden Daten ALERT-1 zur Sicherstellung einer Betriebsbereitschaft von der SU-PINX über die TK-Komponenten R-PINX-1 und R-PINX-2 in Richtung der O-PINX ausgetauscht, wodurch die Erstverbindung CONNECT-1 zwischen den TK-Komponenten O-PINX, R-PINX-1, R-PINX-2 und SU-PINX etabliert ist.

Über die SU-PINX erfolgt dann eine Rückvermittlung in Richtung der O-PINX zu der R-PINX-1 zum Ausführen einer ersten Rufumleitungsoperation mittels einer Rufumleitungsanforderung, wobei die Rufumleitungsoperation daraufhin von einer der beiden TK-Komponenten R-PINX-1 bzw. R-PINX-2 ausgeführt wird. Hierbei dient die R-PINX-1 zu einem Empfang von Optimierungsdaten aus der SU-PINX und die R-PINX-2 zu einem Eröffnen eines Kanals für eine Rufumleítung zum Rufumleitungsziel.

In der SU-PINX ist eine Optimierungsinformation abgelegt, die in Verbindung mit der Rufumleitungsanforderung in Form einer Optimierungsinformation REROUTING-OPT zu einer Steuerung der Rufumleitungsvorgänge an die TK-Komponenten R-PINX-1 und R-PINX-2 geleitet wird. Die Optimierungsinformation enthält für eine optimale Ausführung der Rufumleitungsoperationen relevante Parameter, die entweder vorab festgelegt sind oder in Verbindung mit Rufumleitungsoperationen fortlaufend aktualisiert werden. Für jeden Rufumleitungsvorgang können die TK-Komponenten R-PINX-1 und R-PINX-2 somit prinzipiell neu konfiguriert werden.

Innerhalb der TK-Komponenten R-PINX-1 und R-PINX-2 wird ein zusätzliches Verfahren zur Optimierung von Rufumleitungsoperationen angewendet. Die während des Aufbaus der Erstverbindung SETUP-1 etablierte Erstverbindung CONNECT-1 wird nach einem Abschluss des Rufumleitungsvorgangs in einen kontrollierten Wartestatus gesetzt, ohne die bestehende Verbindung zu trennen. Ein Steuerungsprogramm innerhalb der R-PINX-1 verarbeitet die Optimierungsinformation REROUTING-OPT aus der SU-PINX. Wird durch das Steuerungsprogramm festgestellt, dass eine weitere Rufumleitung in Richtung der R-PINX-2 ausgeführt werden soll, wird die Erstverbindung CONNECT-1 aus dem Status des kontrollierten Wartezustandes in einen aktiven Status gesetzt und für die Rufumleitung ohne einen wiederholten Verbindungsaufbau und insbesondere ohne erneuten Wahlvorgang wieder genutzt. Dabei entfallen die mit solchen Vorgängen verbundenen Gebühren und Kosten werden gespart.

Die Verwendung der Erstverbindung CONNECT-1 wird von der R-PINX-1 gesteuert, wobei eine Meldung DIVERSION-OPT zu der R-PINX-2 gesendet wird. Im Ansprechen auf diese Meldung wird auch die TK-Komponente R-PINX-2 optimiert. Rufumleitungs- und Optimierungsinformationen erfolgen somit gleichzeitig und unter Verwendung einer bereits bestehenden kommunikativen Verbindung zwischen den beteiligten TK-Komponenten.

Die R-PINX-2 öffnet im Ergebnis der beschriebenen Vorgänge eine D-Kanal-Verbindung zu dem Rufumleitungsziel D-PINX, wobei die kommunikative Verbindung zur SU-PINX abgebaut wird. Diese Verfahrensschritte sind in Fig. 2 durch die Bezugszeichen SETUP-2, ALERT-2 und CONNECT-2 bezeichnet. CONNECT-2 bezeichnet hierbei die Erstverbindung CONNECT-1 entweder im Status des kontrollierten Wartezustandes oder reaktivierten Zustandes bei einer erneuten Rufumleitung. Das Bezugszeichen ALERT-2 weist darauf hin, dass bei der Reaktivierung der Erstverbindung der Status der Alarmbereitschaft der R-PINX-Komponenten und der O-PINX ohne einen erneuten Verbindungsaufbau wieder hergestellt wird. Das Bezugszeichen SETUP-2 verdeutlicht den Zweitverbindungsaufbau zwischen der R-PINX-2-Komponente und der Ziel-PINX D-PINX.

Für alle folgenden Rufumleitungen wird die SU-PINX nicht mehr benötigt. Mit dem Abschluss des Empfanges der Optimierungsinformation REROUTING-OPT an der R-PINX-1 und dem Empfang der Meldung DIVERSION-OPT an der R-PINX-2 führen die TK-Komponenten R-PINX-1 und R-PINX-2 selbsttätig Rufumleitungen aus, ohne dass die zentrale Vermittlungseinrichtung SU-PINX in jedem Fall angesprochen werden muss. Die kommunikative Verbindung zwischen der R-PINX-2 und der SU-PINX kann in diesem Falle getrennt werden. Dies ist in Fig. 2 durch das Bezugszeichen DISC verdeutlicht. Die SU-PINX wird nur bei einer Änderung des Rufumleitungszieles benötigt. In diesem Fall erfolgt eine Optimierung nach den bereits bekannten Schritten.

### Bezugszeichenliste

- ALERT-1: Sicherstellung einer Betriebs- und Empfangsbereitschaft
- ALERT-2: Sicherstellung einer Betriebs- und Empfangsbereitschaft auf gleichem Kommunikationsweg in reaktivierter Erstverbindung
- CONNECT-1: etablierte Erstverbindung
- CONNECT-2: Erstverbindung in kontrolliertem Wartezustand, bzw. reaktiviertem Zustand
- DISC: Verbindungsabbau
- D-PINX: Ziel-PINX
- IPN: Intelligentes Privates Netz
- O-PINX: Start-PINX
- PINX: TK-Anlage allgemein
- REROUTING-OPT: Optimierungsinformation
- R-PINX: Rufumleitungs-PINX
- R-PINX-1: erste Komponente der Rufumleitungs-PINX
- R-PINX-2: zweite Komponente der Rufumleitungs-PINX
- SETUP-1: Erstverbindungsaufbau
- SETUP-2: Zweitverbindungsaufbau
- SU-PINX: Vermittlungs-PINX

## Patentansprüche

1. Verfahren zur Rufumleitung in einem intelligenten privaten Netz (IPN) mit Telekommunikationsanlagen, umfassend eine erste TK-Anlage (O-PINX), eine zweite TK-Anlage (SU-PINX) als zentrale Vermittlungsstelle und eine dritte TK-Anlage (R-PINX) zur Ausführung einer Rufumleitung mindestens zu einer vierten TK-Anlage (D-PINX) als Rufumleitungsziel,
**dadurch gekennzeichnet, dass**
ein erster Aufbau (SETUP-1) einer Erstverbindung (CONNECT-1) von der ersten TK-Anlage zu der zweiten TK-Anlage oder in Verbindung damit zu der dritten TK-Anlage erfolgt, wobei
in Verbindung mit dem Aufbau (SETUP-1) der Erstverbindung (CONNECT-1) zwischen der zweiten TK-Anlage und der dritten TK-Anlage eine erste Anforderung zu einer ersten Rufumleitung von der zweiten TK-Anlage zu der dritten TK-Anlage erfolgt,
nach Beendigung der ersten Rufumleitung die Erstverbindung (CONNECT-1) zwischen der zweiten und der dritten TK-Anlage und/oder zwischen einem ersten und einem weiteren Bestandteil (R-PINX-1, R-PINX-2) der dritten TK-Anlage in einen kontrollierten Wartestatus gesetzt wird,
eine weitere Anforderung zu einer weiteren Rufumleitung von der zweiten zu der dritten TK-Anlage über den Weg der im kontrollierten Wartestatus gehaltenen Erstverbindung (CONNECT-1) erfolgt, wobei
die Erstverbindung (CONNECT-1) aus dem Status des kontrollierten Wartezustandes in einen reaktivierten Status (CONNECT-2) gesetzt wird.

2. Verfahren nach Anspruch 1,
**dadurch gekennzeichnet, dass**
mit dem Aufbau der Erstverbindung (CONNECT-1) Daten für eine Optimierungsinformation (OPT) über Rufumleitungen innerhalb der zweiten TK-Anlage (SU-PINX) für eine Prozesssteuerung weiterer Rufumleitungen erzeugt und gespeichert werden.

3. Verfahren nach Anspruch 2,
**dadurch gekennzeichnet, dass**
die Optimierungsinformation innerhalb des intelligenten privaten Netzes (IPN) für eine Rufumleitungssteuerung an die dritte TK-Anlage (R-PINX) als Bestandteil einer Steuerungsmeldung (REROUTING-OPT) gesendet wird.

4. Verfahren nach einem der vorhergehenden Ansprüche,
**dadurch gekennzeichnet, dass**
bei einem mit einem Ziel der ersten Rufumleitung übereinstimmenden Ziel der weiteren Rufumleitung
der erste Bestandteil (R-PINX-1) der dritten TK-Anlage (R-PINX) eine Aktivierung der im Status des Wartezustandes gehaltenen Erstverbindung zu dem zweiten Bestandteil (R-PINX-2) der dritten TK-Anlage ausführt,
eine Anforderung (DIVERSION-OPT) für eine auf dem Weg der Erstverbindung erfolgende Rufumleitung von dem ersten Bestandteil an den zweiten Bestandteil der dritten TK-Anlage übermittelt wird,
der zweite Bestandteil der dritten TK-Anlage im Ansprechen auf die Anforderung (DIVERSION-OPT) für selbsttätige Rufumleitungen konfiguriert wird, die Verbindung zur zweiten TK-Anlage (SU-PINX) abgebaut wird.

5. Anordnung zur Ausführung eines Verfahrens zur Rufumleitung nach einem der vorhergehenden Ansprüche,
**gekennzeichnet durch**
eine in einen ersten und einen zweiten Funktionsabschnitt (R-PINX-1, R-PINX-2) unterteilte, in einem intelligenten privaten Netz angeordnete TK-Anlage zur Rufumleitung mit einer kommunikativen Verbindung zwischen dem ersten und dem zweiten Funktionsabschnitt, fallweise in einem aktiven Zustand oder in einem kontrollierten Wartestatus.

6. Anordnung zum Ausführen eines Verfahrens nach einem der Ansprüche 1 bis 4,
**gekennzeichnet durch**
eine in einem intelligenten privaten Netz (IPN) angeordnete TK-Anlage für eine zentrale Vermittlung (SU-PINX) mit einem Speicherbereich für Daten einer Optimierungsinformation (OPT) und Einrichtungen zum Erzeugen einer Steuerungsmeldung (REROUTING-OPT) zur Steuerung der TK-Anlage (R-PINX-1, R-PINX-2) für Rufumleitungsprozesse aus den Daten der Optimierungsinformation.

7. Anordnung nach Anspruch 5 und 6,
**dadurch gekennzeichnet, dass**
der erste Funktionsabschnitt (R-PINX-1) der TK-Anlage zur Rufumleitung einer Einrichtung zum Verarbeiten der Steuerungsmeldung (REROUTING-OPT) und zum Erzeugen und Versenden einer Anforderung (DIVERSION-OPT) an den zweiten Funktionsabschnitt (R-PINX-2) für ein Eröffnen einer kommunikativen Verbindung zu einem Rufumleitungsziel (D-PINX) aufweist.

8. Anordnung nach einem der Ansprüche 5 bis 7,
**dadurch gekennzeichnet, dass**
der zweite Funktionsabschnitt (R-PINX-2) der TK-Anlage zur Rufumleitung eine Einrichtung zum Empfang der Anforderung (DIVERSION-OPT) zum Aufbau einer kommunikativen Verbindung zu dem Rufumleitungsziel (D-PINX) und zum Erzeugen der kommunikativen Verbindung aufweist.
